# EUROPEAN PATENT SPECIFICATION

(11) **EP 1 273 479 B1**
(45) Date of publication and mention of the grant of the patent: **08.12.2004**
(21) Application number: 01116021.5
(22) Date of filing: 02.07.2001
(51) Int. Cl.: B60R 9/10

(54) **Bicycle carrier on cars**
Fahrradträger am Fahrzeug
Porte-bicyclette sur des véhicules

(43) Date of publication of application: 08.01.2003
(73) Proprietor: Wang, Chiu-Kuei, Yuanli, Miaoli Hsien (TW)
(72) Inventor: Wang, Chiu-Kuei, Yuanli, Miaoli Hsien (TW)
(74) Representative: Robba, Pierpaolo

(56) References cited:
- DE-A- 19 524 077
- DE-U- 8 900 184
- DE-U- 9 116 165
- DE-U- 9 306 748
- US-A- 5 121 862
- US-A- 5 228 607
- US-A- 5 579 974

## Description

### FIELD OF THE INVENTION

The present invention relates to a bicycle carrier and more particularly, to a locking device to maintaining two posts of the bicycle carrier at correct positions.

### BACKGROUND OF THE INVENTION

A conventional bicycle carrier connected on a car generally includes two rods and each of which has a clamping member on a lower end thereof. Two stretch plates are respectively pivotally connected to the two rods so as to stretch the two rods outward. When the two rods are stretched outward at their upper ends, the clamping members on the lower ends of the rods clamp a sphere connected on the car. A pin is used to pin the two stretch plates together so that the stretch plates maintain the two rods to prevent the two clamping members from disengaging from the sphere. The user has to hold the two stretch plates so as to align the two respective holes in the two plates such that the pin can extend through the aligned holes. The pin could jump off from the holes of the stretch plates during riding on serrated roads and the bicycle carried on the carrier will drop from the car. A bicycle carrier according to the preamble of claim 1 is known from DE-A-195 240 77.

### SUMMARY OF THE INVENTION

In accordance with one aspect of the present invention, there is provided a bicycle carrier which comprises two rods each having a clamping member connected to an end thereof and a support rod extending from the other end of each of the two rods. Two connection plates are connected between the two respective first ends of the two rods 10. A first stretch plate is pivotally connected to the second end of one of the two rods and a second stretch plate is pivotally connected to the second end of the other one of the two rods. A connection member is pivotally connected to the first stretch plate and the second stretch plate. Each of the first stretch plate and the second stretch plate has an aperture. An operation plate is pivotally connected to the connection member and has a locking member which extends through the connection member and the two respective apertures. A spring is biased between the operation plate and the connection member.

The primary object of the present invention is to provide a bicycle carrier that has a locking device for securely position the two stretch plates at their stretch positions.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle carrier of the present invention;
Fig. 2 is a perspective view to show a locking device and the two stretch plates of the bicycle carrier of the present invention;
Fig. 3 is an exploded view to show locking device and the two stretch plates of the bicycle carrier of the present invention;
Fig. 4A is an illustrative view to show the two stretch plates are pivoted and the two rods are pulled toward with each other;
Fig. 4B is an illustrative view to show the two stretch plates are stretched outward and the two rods are stretched wide;
Figs. 5A to 5C show how the first stretch plate is pivoted to let the locking member engaged with an aperture in the first stretch plate;
Figs. 6A and 6B show that the operation plate is locked by the locking plate of the lock device;
Fig. 7 shows that the operation plate is pushed to remove the locking member from the two stretch plates, and
Fig. 8 shows the bicycle carrier of the present invention attached on a car.

### DETAILED DESCRIPTION OF THE PREFERRED EMBODIMENT

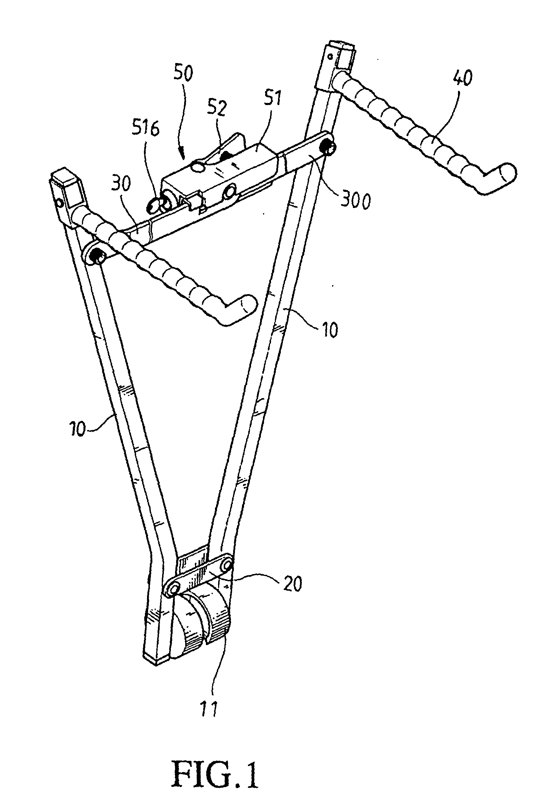

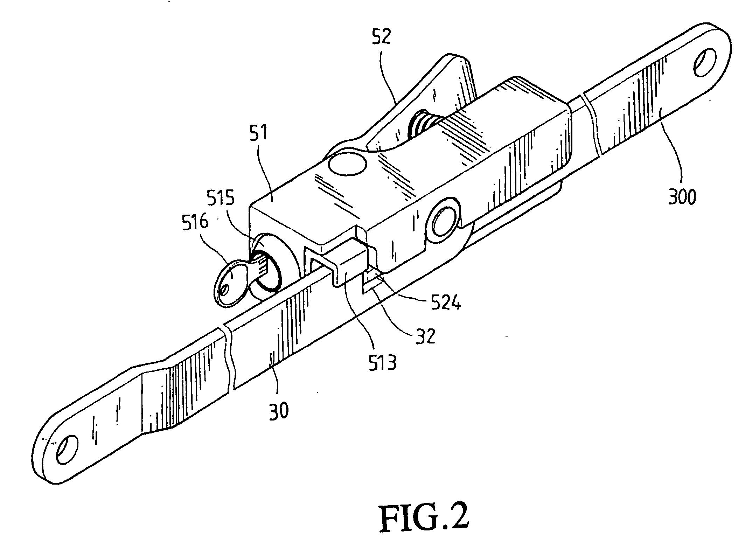

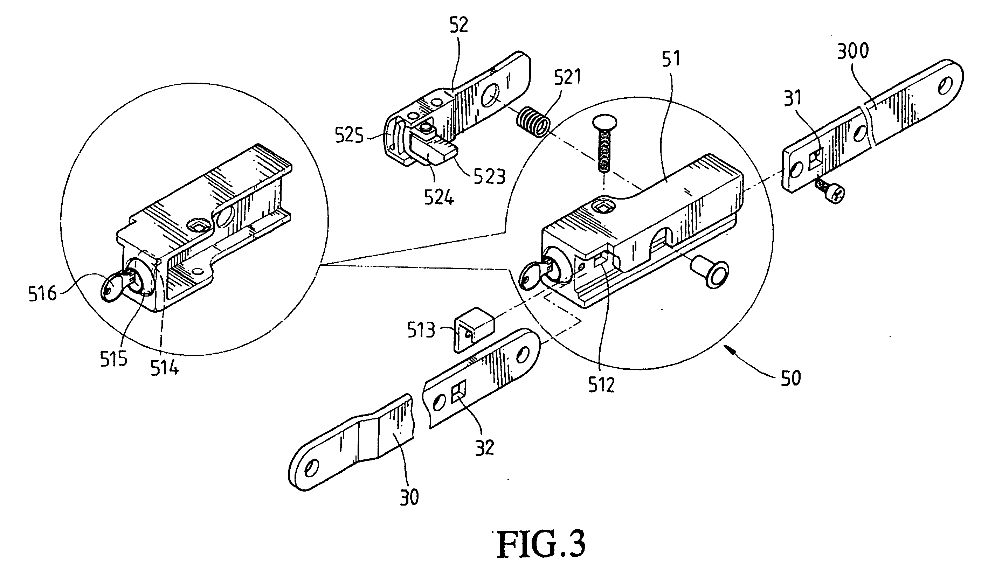

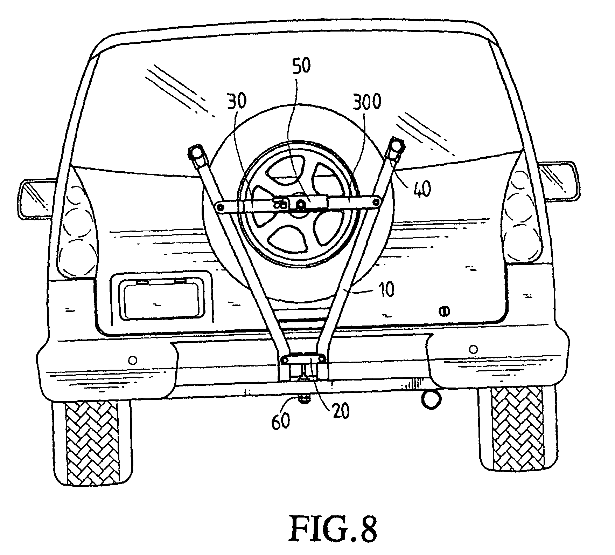

Referring to Figs. 1 to 3 and 8, the bicycle carrier of the present invention comprises two rods 10 each having a clamping member 11 connected to a first end thereof and a support rod 40 extends from a second end of each of the two rods 10. Two connection plates 20 are connected between the two respective first ends of the two rods 10 so as to connect the two rods 10 together.

A first stretch plate 30 is pivotally connected to the second end of one of the two rods 10 and a second stretch plate 300 is pivotally connected to the second end of the other one of the two rods 10. The two stretch plates 30 extend toward with each other and a locking device 50 is connected between the first stretch plate 30 and the second stretch plate 300. The locking device 50 has a connection member 51 pivotally connected to the first stretch plate 30 and the second stretch plate 300 and an operation plate 52 is pivotally connected to the connection member 51. Each of the first stretch plate 30 and the second stretch plate 300 has an aperture 32/31. The operation plate 52 has a locking member 524 which has an inclined surface 523 which faces a top edge of the first stretch plate 30. The locking member 524 is to be extended through a hole 512 defined through the connection member 51 and the two respective apertures 32, 31. A spring 521 is biased between the operation plate 52 and the connection member 51 so that when pushing the end connected to the spring 521 toward the locking member 51, the locking member 524 is moved away from the locking member 51. A retaining hook 513 is connected to the connection member 51 so as to restrain the first stretch plate 30 when the two rods 10 are stretched wide by the first stretch plate 30 and the second stretch plate 300.

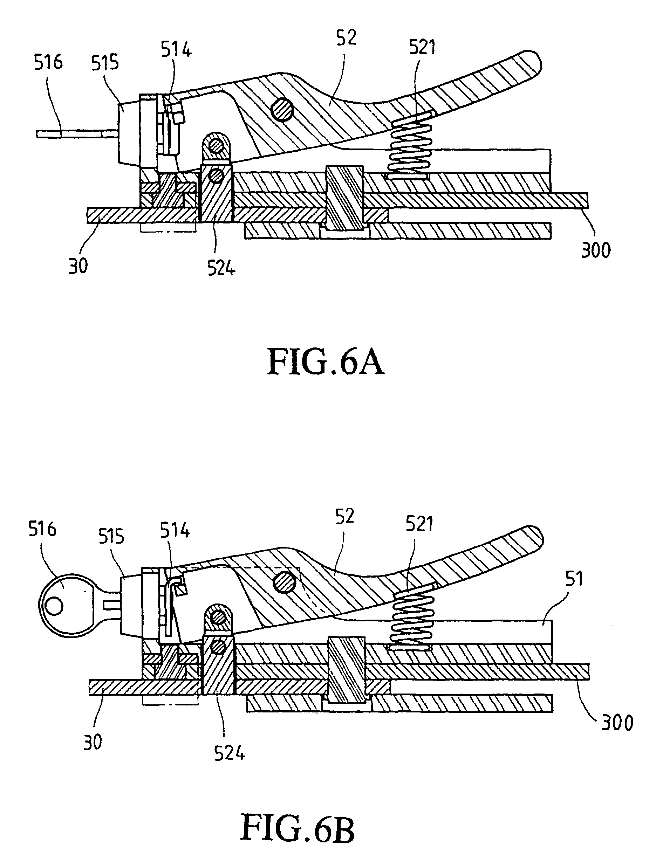

Further referring to Figs. 6A and 6B, a lock device 515 is connected to the connection member 51 and a locking plate 514 is pivotally connected to the lock device 515. A slot 525 is defined through the operation plate 52 so that a user may use a key 516 to rotate the locking plate 514 into the slot 525. When the locking plate 514 is engaged with the slot 525, the operation plate 52 cannot be operated.

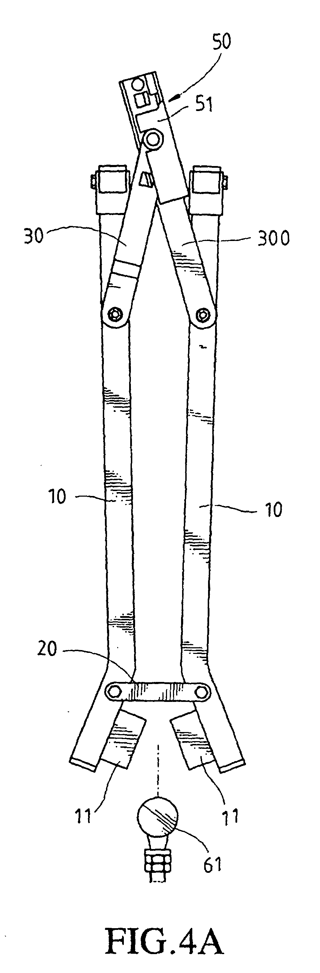

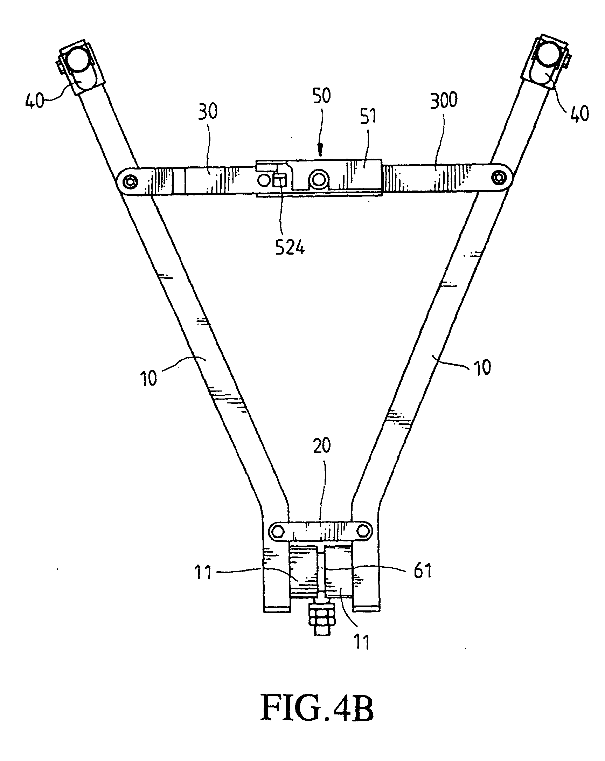

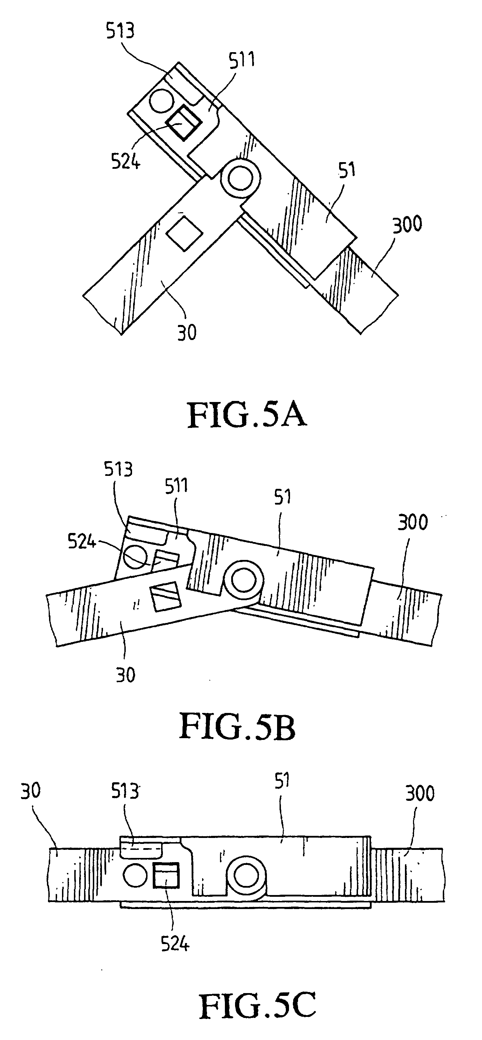

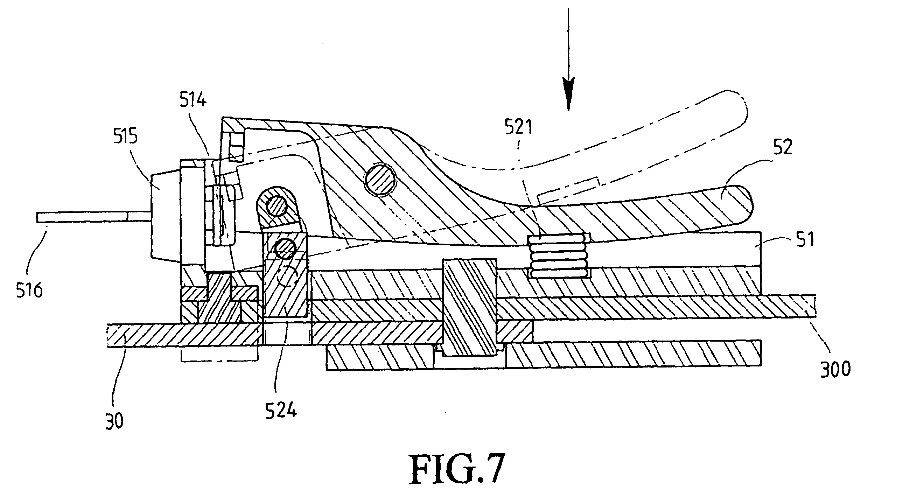

Referring to Fig. 7, when pushing the operation plate 52 to compress the spring 521, the locking member 524 is removed from the two apertures 32, 31, and the first stretch plate 30 is pivoted relative to the connection member 51 so that the two rods 10 are pivoted as shown in Fig. 4A. The two clamping members 11 are opened wide and can clamp the sphere 61 connected to the car. As shown in Figs. 5A to 5C, when the first stretch plate 30 is pivoted as shown, when the top edge of the first stretch plate 30 contacts the inclined surface 523 of the locking member 524, the locking member 524 is pushed out and the first stretch plate 30 can be continuously pivoted till the aperture 32 of the first stretch plate 30 is located in alignment with the aperture 31 in the second stretch plate 300. The locking member 524 then extends through the two apertures 31, 32, and the first stretch plate 30 is then fixedly positioned.

The locking device 50 includes a lock device 515 to make sure that the operation plate 52 will not be unintentionally pushed so as to maintain a safety status for the bicycle carrier all the time.

## Claims

1. A bicycle carrier comprising:
two rods (10) each having a clamping member (11) connected to a first end thereof and a support rod (40) extending from a second end of each of said two rods, two connection plates (20) connected between said two respective first ends of said two rods;
a first stretch plate (30) pivotally connected to said second end of one of said two rods and a second stretch plate (300) pivotally connected to said second end of the other one of said two rods, a connection member (51) pivotally connected to said first stretch plate and said second stretch plate, each of said first stretch plate and said second stretch plate having an aperture (31, 32), **characterized in that** it further comprises
an operation plate (52) pivotally connected to said connection member and having a locking member (524) which extends through said connection member and said two respective apertures, a spring (521) biased between said operation plate and said connection member.

2. The bicycle carrier as claimed in claim 1 further comprising a lock device (515) connected to said connection member and a locking plate (514) pivotally connected to said lock device, a slot (525) defined through said operation plate so as to receive said locking plate.

3. The bicycle carrier as claimed in claim 1, wherein said locking member has an inclined surface (523) which faces a top edge of said first stretch plate.

4. The bicycle carrier as claimed in claim 1 further comprising a retaining hook (513) connected to said connection member and said first stretch plate being engaged with said retaining hook when said two rods are stretched wide by said first stretch plate and said second stretch plate.

## Patentansprüche

1. Fahrradträger, der folgendes aufweist:
zwei Stangen (10), jede mit einem an einem ersten Ende angeschlossenen Klemmelement (11) und einer von einem zweiten Ende jeder der beiden Stangen ausgehenden Trägerstange (40), sowie zwei Verbindungslaschen (20), die die jeweiligen ersten Enden jener beiden Stangen verbinden;
eine erste, mit dem zweiten Ende einer der zwei Stangen drehbar verbundene Spreizlasche (30) und eine zweite mit dem zweiten Ende der anderen der beiden Stangen drehbar verbundene Spreizlasche (300), einem mit jener ersten und zweiten Spreizlasche drehbar verbundenen Verbindungsstück (51), wobei jede erste und zweite Spreizlasche eine Öffnung (31, 32) besitzen,
**dadurch gekennzeichnet, daß** er weiterhin umfaßt:
eine drehbar an jenes Verbindungsstück angelenkte Betätigungslasche (52) mit einem Riegel (524), der sich durch jenes Verbindungsstück und die beiden jeweiligen Öffnungen erstreckt, sowie einer zwischen der Betätigungslasche und dem Verbindungsstück eingespannten Feder (521).

2. Fahrradträger nach Anspruch 1,
der weiter eine Schließvorrichtung (515) aufweist, die in das Verbindungsstück eingefügt ist und ein mit jener Schließvorrichtung drehbar verbundenes Sperrglied (514) sowie ein in der Betätigungslasche gebildeter Schlitz (525), der das Sperrglied aufnimmt.

3. Fahrradträger nach Anspruch 1,
wobei jener Riegel eine geneigte Fläche (523) hat, die einer oberen Kante jener ersten Spreizlasche gegenüberliegt.

4. Fahrradträger nach Anspruch 1,
der weiter eine Halteklammer (513) aufweist, die mit dem Verbindungsstück verbunden ist und jene erste Spreizlasche mit der Halteklammer zusammenwirkt, wenn jene zwei Stangen durch die erste und zweite Spreizlasche weit gespreizt werden.

## Revendications

1. Support de bicyclette comprenant :
deux tiges (10) comportant chacune un élément de blocage (11) connecté à une première de leurs extrémités et une tige de support (40) s'étendant à partir d'une seconde extrémité de chacune desdites deux tiges, deux plaques de raccordement (20) étant connectées entre deux dites premières extrémités respectives desdites deux tiges ;
une première languette d'écartement (30) connectée à pivotement à ladite seconde extrémité de l'une desdites deux tiges et une seconde languette d'écartement (300) connectée à pivotement à ladite seconde extrémité de l'autre desdites deux tiges, un élément de raccordement (51) étant connecté à pivotement à ladite première languette d'écartement et à ladite seconde languette d'écartement, chaque languette de ladite première languette d'écartement et de ladite seconde languette d'écartement comportant une ouverture (31, 32),
**caractérisé en ce qu'**il comprend, de plus,
une plaque de fonctionnement (52) connectée à pivotement audit élément de raccordement et comportant un élément de verrouillage (524) qui s'étend à travers ledit élément de raccordement et les deux dites ouvertures respectives, un ressort (521) rappelé entre ladite plaque fonctionnelle et ledit élément de raccordement.

2. Support de bicyclette selon la revendication 1 comprenant, de plus, un dispositif de verrouillage (515) connecté audit élément de raccordement et une languette de verrouillage (514) connectée à pivotement audit dispositif de verrouillage, une fente (525) étant définie à travers ladite plaque de fonctionnement de façon à recevoir ladite languette de verrouillage.

3. Support de bicyclette selon la revendication 1 dans lequel ledit élément de verrouillage comporte une surface inclinée (523) qui fait face à un bord supérieur de ladite première languette d'écartement.

4. Support de bicyclette selon la revendication 1 comprenant, de plus, un crochet de maintien (513) connecté audit élément de raccordement et ladite première languette d'écartement étant engagée avec ledit crochet de maintien lorsque les deux dites tiges sont écartées largement par ladite première languette d'écartement et ladite seconde languette d'écartement.
